# EUROPEAN PATENT SPECIFICATION

(11) **EP 4 128 176 B1**
(45) Date of publication and mention of the grant of the patent: **27.08.2025**
(21) Application number: 21716093.6
(22) Date of filing: 24.03.2021
(51) Int. Cl.: G07C 13/00

(54) **A VOTING APPARATUS**
WÄHLVORRICHTUNG
APPAREIL DE VOTE

(30) Priority: 25.03.2020 GB 202004345
(43) Date of publication of application: 08.02.2023
(73) Proprietor: Pakflatt (UK) Limited, Londonderry BT48 0LY (GB)
(72) Inventor: MCGONAGLE, Patrick, Londonderry County Londonderry BT48 7TA (GB); MCGILLOWAY, Stephen, Belfast County Antrim BT1 6PJ (GB); BELL, Richard, Antrim BT29 4JF (GB); JOHNSON, Duncan, Hampshire GU12 6DT (GB)
(74) Representative: FRKelly
(86) International application number: PCT/EP2021/057649
(87) International publication number: WO 2021/191319

(56) References cited:
- WO-A2-2004/019166
- GB-A- 2 369 481
- US-A1- 2002 092 908
- US-A1- 2018 211 466

## Description

### Field of the Invention

The present invention relates to voting apparatus, in particular to voting apparatus for aiding visually impaired electors to vote.

### Background to the Invention

In the United Kingdom and many other countries and jurisdictions within those countries, voting on various issues such as elections, referendums, etc. is carried out at polling centres using standardised ballot papers on which a list of candidates or questions are arranged in a relatively standard layout or format. The format of the ballot paper generally takes the form of a vertical list of the candidates including all relevant information such as political party, etc., with a box provided on one side, generally to the right of each row into which the voter can place a designated mark such as an "X" or a numeral in order to make the appropriate selection such as picking an individual candidate or number of candidates.

While the above format is effective for sighted individuals, there are obviously significant problems for the blind or visually impaired, who may require assistance, but which also conflicts with the general principals and legal rights around voting, in that a voter should be unaccompanied when casting their vote in order to ensure the privacy and legitimacy of the vote.

Various solutions to these issues have been used in the past to varying degrees of success. One such example is the use of so called tactile voting devices or ballot paper templates, which consists of an overlay which is placed on top of the ballot paper and includes braille translations of the underlying rows of the ballot paper, enabling blind or visually impaired individuals to vote independently and in private.

However there are problems with the existing tactile voting devices. Only a relatively small proportion of the blind or visually impaired can read braille, with the remaining proportion thus not being able to use the tactile voting devices. Current devices therefore do not allow blind and partially sighted individuals to vote independently without the ability to read braille; either an official in charge of the polling station or a close family member is required to read out the names of the candidates and the order in which they appear on the ballot paper.

It would therefore be desirable to provide an improved voting aid for the blind or visually impaired.

WO2004/019166A2 discloses a voting system that provides audible or tactile feedback when voting targets are probed with a wand. GB2369481A discloses a voting aid comprising a template with visual and/or tactile identification means for aiding identification of the marking section of the ballot paper.

### Summary of the Invention

From a first aspect the invention provides a voting apparatus for receiving a ballot paper having at least one ballot, the apparatus comprising: a voting aid for overlying the ballot paper and comprising a respective ballot marking aid for each ballot of the ballot paper; and an audio system comprising means for providing an audio output comprising information corresponding to each ballot, wherein the audio system comprises a respective user activation device for each voting option, and wherein in response to operation of any one of said user activation devices, said audio system is configured to provide the audio output for a respective one of the voting options.

The audio system, and therefore the apparatus, may comprise audio output means for audibly rendering said audio output, said audio output means preferably comprising headphones, earphones a loudspeaker.

The audio system may comprise audio output means for providing said audio output to an audio rendering device, for example headphones, earphones or a loudspeaker.

In preferred embodiments, said audio system includes means for storing a respective audio file associated with each user activation device, wherein in response to operation of any one of said user activation devices, said audio system is configured to play the associated audio file. The user activation devices are preferably arranged in a linear array and have a spatial arrangement that matches the spatial arrangement of the ballots on the ballot paper. Preferably, each activation device is provided with an indicator of its position in the array, the indicator preferably comprising a corresponding tactile identifier, or numeral and/or a braille representation of the corresponding identifier or numeral.

The user activation devices may be provided on a body of the voting apparatus or on the voting aid. The preferred audio system comprises a respective user activation device for each voting option. The user activation devices are preferably arranged for alignment with a respective voting option and/or with a respective ballot marking aid.

The apparatus may include respective guide means, preferably tactile guide means, for guiding a user between each activation device and the respective voting option and/or ballot marking aid, wherein, optionally, the guide means is provided at least partly on the respective ballot marking aid.

Preferably, the audio system includes means for storing a respective audio file associated with each user activation device, wherein in response to operation of any one of said user activation devices, said audio system is configured to play the associated audio file.

Typically, the user activation devices are arranged in a linear array and have a spatial arrangement that matches the spatial arrangement of the voting options on the ballot paper. Each activation device is preferably provided with or associated with at least one indicator of its position in the array, said at least one indicator preferably comprising a corresponding tactile identifier, and/or numeral and/or a braille representation of the corresponding identifier or numeral. Said at least one indicator is provided on and/or adjacent the respective activation device. Said at least one indicator of each activation device may be arranged for alignment with a respective voting option and/or with a respective ballot marking aid. Said at least one indicator may be provided on the respective ballot marking aid at a location that is adjacent the respective voting option, in use. Said at least one indicator of each ballot marking aid may be arranged for alignment with a respective voting option and/or with a respective user activation device.

Preferably, said voting aid is located, in use, such that each ballot marking aid is aligned with a corresponding user activation device, preferably located adjacent the respective user activation device.

In preferred embodiments, each ballot marking aid includes securing means operable to selectively expose a marking region of the respective voting option, preferably being operable to selectively expose or cover the respective marking region. The securing means may be operable to, preferably in a ballot-exposing state, overlap with and/or overlie the respective user activation device, and wherein, preferably, said securing means is foldable onto the respective user activation device, preferably in said ballot-exposing state. Said securing means may comprise a tab or other structure that is movable between said ballot-exposing state and a ballot-covering state in which it is positioned to cover the respective marking region. The tab or other structure is preferably foldable between the ballot-exposing and ballot-covering states. The securing means may be operable to selectively cover or otherwise secure the respective aperture, window or exposing means, or otherwise to indicate that the respective voting option has been marked.

In preferred embodiments, each ballot marking aid comprises an aperture, window or other means for exposing the marking region of the respective voting option, the apparatus being arranged so that each user activation device is located adjacent the respective aperture, window or exposing means.

The securing means, preferably comprising a tab, may be located adjacent the respective user activation device, or may be located on the opposite side of the respective aperture, window or exposing means from the respective activation device.

Typically, each ballot marking aid comprises means for selectively exposing the marking region of the respective voting option, preferably located along an edge of the voting aid, the apparatus preferably being arranged so that the user activation devices are located adjacent the exposing means. Said selective exposing means comprises a movable tab operable to expose or cover the respective marking region.

Typically, the apparatus comprises a body, the body comprising a portion that is shaped and dimensioned to receive the voting aid and ballot paper.

The apparatus may include alignment means for aligning the voting aid with the activation devices.

In preferred embodiments, the user activation devices overlie the voting aid, each user activation device being aligned with the respective ballot marking aid, and wherein, optionally, the user activation devices are provided on a substrate that overlies the voting aid. Alternatively, the user activation devices may be provided on the voting aid, preferably on the respective ballot marking aid.

In preferred embodiments, each user activation device comprises a button or a switch or other user input device.

The audio output means may comprise an audio output jack, audio output port and/or a wireless transmitter for providing the audio output to the audio rendering device by cable or a wireless connection.

The audio system may include audio input means for enabling audio files to be received by the audio system, the audio input means optionally comprising a hardware interface such as a cable or device port, and/or a memory card slot, and/or a wireless receiver.

In preferred embodiments, said ballot marking aids are arranged in a linear array and have a spatial arrangement that matches the spatial arrangement of the ballots on the ballot paper, each ballot marking aid comprising an aperture, window and/or tab, or other means for exposing a marking region of the respective ballot. Preferably, each ballot marking aid includes an indicator of its position in the array, the indicator preferably comprising a corresponding tactile identifier, or numeral and/or a braille representation of the corresponding identifier or numeral.

In preferred embodiments, said voting aid is located, in use, such that each ballot marking aid is aligned with a corresponding user activation device, preferably located adjacent the respective user activation device.

From another aspect the invention provides a voting apparatus suitable for receiving a ballot paper having at least one ballot and comprising: a voting aid comprising at least one aperture arranged to overlie the at least one ballot of the ballot paper; and means for providing at least one audio signal comprising information relevant to the at least one ballot.

Ideally, the means for providing an audio signal comprises a user operated activation means. Preferably, the means for providing an audio signal comprises an audio output device configured to output said audio signal upon operation of the user operated activation means. Optionally, the voting apparatus comprises a support. Ideally, a ballot paper is received between the support and the voting aid. Preferably, the voting apparatus is configured to receive a ballot paper comprising a plurality of ballots and comprises: a plurality of apertures, each aperture arranged to overlie each respective ballot of the ballot paper. Ideally, a plurality of user operated activation means is provided, each corresponding to a respective ballot of a ballot paper. Preferably, each aperture is alignable with a corresponding user operated activation means. Ideally, the user operated activation means comprises activation identification means. Preferably, the at least one aperture is provided with aperture identification means. Ideally, the aperture identification means matches the activation identification means of a corresponding user operated activation means.

Advantageously, a visually impaired user may associate an audio signal output on operation of a chosen user operated activation means with an aperture having matching identification means to that of said chosen user operated activation means. Ideally, the user operated activation means and/or the audio output means are locatable on the support. Preferably, the voting apparatus further comprises alignment means for aligning a ballot paper and/or the voting aid with respect to the support. Ideally, the alignment means are sized, dimensioned, and positioned to at least align the at least one aperture with a corresponding user operated activation means, and/or to align the at least one aperture with a corresponding at least one ballot. Preferably, attachment means are provided between the voting aid and the support. Ideally, the attachment means are adhesive attachment means.

Preferably, the user operated activation means is a button. Ideally, the audio output means is an audio output jack operable to output the audio signal via a wired connection to headphones or earphones. Alternatively or in addition, the audio output comprises a Bluetooth^{®} output which is operable to output the audio signal to a user via a wireless connection. Ideally, the audio signal comprises information in relation to a candidate, party, voting choice, and/or information in relation to a question on the at least one ballot. Most preferably, the audio signal comprises information in relation to the name of a candidate on the at least one ballot and/or the political party to which said candidate is affiliated.

Preferably, the voting aid comprises securing means to allow the at least one aperture to be secured. Ideally, the voting aid comprises indicating means to indicate the at least one aperture is secured. Optionally, the support is a solid support. Further optionally, the support is a solid, generally planar support. Optionally, the support comprises alignment means for aligning a ballot paper and/or the voting aid.

Optionally, the identification means are visual identification means to allow the at least one aperture to be visually identified. Optionally, the identification means are visual indicia to allow the at least one aperture to be visually identified. Optionally or additionally, the identification means are tactile identification means to allow the at least one aperture to be tactilely identified. Optionally or additionally, the identification means are tactile indicia to allow the at least one aperture to be tactilely identified. Preferably, the identification means are visual and tactile (visio-tactile) identification means to allow the at least one aperture to be both visually and tactilely identified. Optionally, the securing means are physical securing means to allow the at least one aperture to be physically secured. Optionally, the indicating means are tactile indicating means to tactilely indicate that the at least one aperture is secured. Optionally or additionally, the indicating means are audible indicating means to audibly indicate that the at least one aperture is secured. Preferably, the indicating means are audible and tactile (audio-tactile) indicating means to both audibly and tactilely indicate that the at least one aperture is secured. Optionally, the identification means comprise raised dimples or characters. Optionally, the identification means comprise printed indicia. Preferably, the identification means comprise raised dimples or characters having indicia printed thereon. Optionally, the securing means comprise a cover arranged to occlude the at least one aperture. Further optionally, the securing means comprise a cover arranged to reversibly occlude the at least one aperture. Optionally, the securing means are mountable to the voting aid. Further optionally, the securing means are hingedly mountable to the voting aid. Optionally, the cover is mountable to the voting aid. Further optionally, the cover is hingedly mountable to the voting aid. Optionally or additionally, the securing means are mountable adjacent the at least one aperture. Further optionally, the securing means are hingedly mountable adjacent the at least one aperture.

Optionally or additionally, the cover is mountable adjacent the at least one aperture. Further optionally, the cover is hingedly mountable adjacent the at least one aperture. Optionally, the cover is arranged to be displaceable between an open position and a closed position. Optionally, in the open position, the cover does not occlude the at least one aperture. Optionally, in the closed position, the cover occludes the at least one aperture. Optionally, the securing means are arranged to be displaceable between an open position and a closed position. Optionally, in the open position, the securing means do not occlude the at least one aperture. Optionally, in the closed position, the securing means occlude the at least one aperture. Preferably, the securing means are arranged to be displaceable between an open position wherein the securing means do not occlude the at least one aperture and a closed position wherein the securing means occlude the at least one aperture.

Preferably, the cover is arranged to be displaceable between an open position wherein the cover does not occlude the at least one aperture and a closed position wherein the cover occludes the at least one aperture.

Optionally, the indicating means comprise first and second sections arranged such that contact of the first section with the second section provides an audible indication. Further optionally, the indicating means comprise first and second sections arranged such that contact of the first section with the second section provides an audible sound.

Alternatively, the indicating means comprise first and second sections arranged such that separation of the first section from the second section provides an audible indication. Further optionally, the indicating means comprise first and second sections arranged such that separation of the first section from the second section provides an audible sound.

Optionally, the first section is mountable to the second section. Further optionally, the first section is reversibly mountable to the second section. Still further optionally, the first section is engageable with the second section. Still further optionally, the first section is reversibly engageable with the second section.

Optionally, the first section comprises a plurality of hooks. Further optionally or additionally, the second section comprises a plurality of loops. Still further optionally or additionally, the first and second sections together form a hook-and-loop fastening. Preferably, the first and second sections together form a reversible hook-and-loop fastening. Optionally, the first section comprises a head. Further optionally or additionally, the second section comprises a shank arranged to receive the head of the first section. Still further optionally or additionally, the second section comprises a shank arranged to reversibly receive the head of the first section. Still further optionally or additionally, the first and second sections together form a snap fastening. Preferably, the first and second sections together form a reversible snap fastening. Optionally, the alignment means comprise at least one mating element. Further optionally, the alignment means comprise at least two mating elements. Still further optionally, the alignment means comprise two mating elements. Optionally, the alignment means comprise at least one mating element arranged to correspond with a respective mating element of the ballot paper and/or of the voting aid. Further optionally, the alignment means comprise at least two mating elements, each arranged to correspond with a respective mating element of the ballot paper and/or of the voting aid. Still further optionally, the alignment means comprise two mating elements, each arranged to correspond with a respective mating element of the ballot paper and/or of the voting aid.

Optionally, the alignment means comprise at least one protrusion arranged to correspond with a respective aperture of the ballot paper and/or of the voting aid. Further optionally, the alignment means comprise at least two protrusions, each arranged to correspond with a respective aperture of the ballot paper and/or of the voting aid. Still further optionally, the alignment means comprise two protrusions, each arranged to correspond with a respective aperture of the ballot paper and/or of the voting aid.

Optionally, the alignment means comprise a pair of protrusions, each arranged to correspond with a respective pair of apertures of the ballot paper and/or of the voting aid.

Optionally, the pair of protrusions is arranged to be received within the respective pair of apertures of the ballot paper and/or of the voting aid. Further optionally, the pair of protrusions is arranged to be releasably received within the respective pair of apertures of the ballot paper and/or of the voting aid.

Optionally or additionally, the pair of apertures of the ballot paper is arranged to receive the respective pair of protrusions and/or of the device. Optionally or additionally, the pair of apertures of the ballot paper is arranged to releasably receive the respective pair of protrusions and/or of the device.

According to a second aspect of the present invention, there is provided a method of voting, the method comprising the steps of: providing a voting apparatus according to a first aspect of the present invention; overlying the at least one ballot with the at least one aperture; operating a user operated activation means to cause an audio output device to output an audio signal comprising information relevant to the at least one ballot and overlying aperture; marking the at least one ballot based on information provided in said audio signal.

According to a third aspect, there is provided a method of facilitating a voting process comprising the steps of finalising a ballot paper, creating an audio file containing information representative of said ballot paper, securely transferring said audio file to a polling station, receiving said audio file at said polling station, updating one or more voting apparatus according to the first aspect with said audio file, and attaching a printed copy of the finalised ballot paper to each of the one or more voting apparatus.

According to a fourth aspect of the invention there is provided a system for implementing a voting management process, the system comprising a presiding officer portal, an administrator dashboard, a storage device, a speech synthesis function, an internet of things function, at least one compute function to operably connect the speech synthesis function, storage device, and internet of things function, and one or more voting apparatus according to the first aspect operably connectable to the system via the internet of things function.

According to a fifth aspect of the invention there is provided a voting aid for use with the voting apparatus of the first aspect, the voting aid comprising at least one aperture arranged to overlie at least one ballot of a ballot paper.

Other preferred features are recited in the dependent claims.

### Brief Description of the Drawings

Embodiments of the invention are now described by way of example and with reference to the accompanying drawings in which like numerals are used to denote like parts and in which:
**Figure 1** is a perspective view of an embodiment of a voting aid that is part of a voting apparatus embodying the invention;
**Figure 2** is a perspective view of an embodiment of a support that is part of some embodiments of the voting apparatus;
**Figure 3** is an exploded perspective view of the voting aid of Figure 1 and support of Figure 2 which together provide a voting apparatus embodying one aspect of the invention;
**Figure 4** is a non-exploded perspective view of voting apparatus of Figure 3;
**Figure 5** is another perspective view of the voting apparatus of Figure 4 showing a securing means in a closed position;
**Figure 6** is a perspective view of an alternative embodiment of the voting apparatus;
**Figure 7** is a detail perspective view of the voting apparatus of Figure 6 showing input and output features thereof;
**Figure 8** shows two exploded perspective views of the voting apparatus of Figure 6;
**Figure 9** is a process chart showing a process from candidate list finalisation to elector voting;
**Figure 10** is a perspective view of an alternative voting aid suitable for use with embodiments of the invention;
**Figure 11A** is a bottom view of the voting aid of Figure 10;
**Figure 11B** is top view of the voting aid of Figure 10;
**Figure 12A** is a perspective view of the voting aid of Figure 10; showing a securing means between an open position and a closed position;
**Figure 12B** is a perspective view of the voting aid of Figure 10; showing the securing means in the closed position;
**Figure 12C** is a perspective view of the voting aid of Figure 10; showing multiple instances of the securing means in the closed position;
**Figure 13** is a perspective view of a support for the voting aid of Figures 10 to 12;
**Figure 14** is a block diagram of a system for managing/updating one or more voting apparatus;
**Figure 15** is a block diagram of an embodiment of an audio system included in voting apparatus embodying the invention;
**Figure 16** is a perspective view of a third embodiment of the voting apparatus;
**Figure 17** is an alternative perspective view of the voting apparatus of Figure 16;
**Figure 18** is an exploded perspective view of the voting apparatus of Figure 16;
**Figure 19** is a perspective view of a fourth embodiment of the voting apparatus; and
**Figure 20** is a perspective view of a fifth embodiment of the voting apparatus.

### Detailed Description of the Invention

The invention will now be described with reference to exemplary voting apparatus. It will be understood that the exemplary voting apparatus are shown to assist in an understanding of the invention and are not to be construed limiting to the invention. Furthermore, elements or components that are described with reference to any one embodiment may be interchanged with those of other embodiments or other equivalent elements without departing from the spirit of the invention.

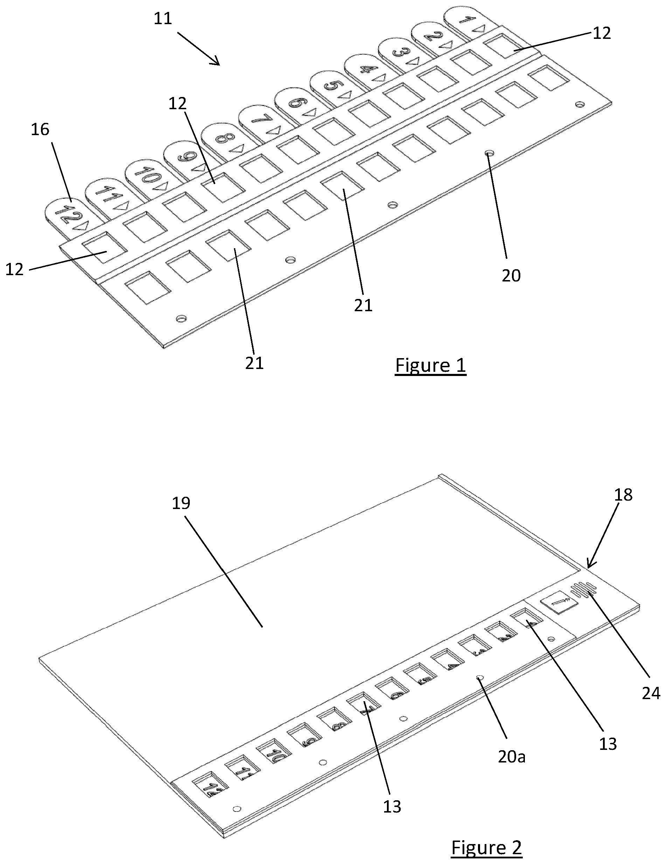

Figures 1 to 5 show a first embodiment of a voting apparatus 10 which is configured to removably receive a ballot paper (not shown in Figures 1 to 5) having at least one ballot. The voting apparatus 10 comprises a voting aid 11 comprising at least one aperture 12, or other exposure means, arranged to overlie the at least one ballot of the ballot paper (one aperture per ballot). In the present disclosure, the word "ballot" is intended to mean a markable voting option provided on the ballot paper which may be selected by a voter by marking a corresponding marking region of the respective ballot. For example, each ballot may comprise a candidate's name (e.g. in the case of an election) or other votable choice (e.g. in the case of a referendum). The ballot paper typically has a plurality of ballots, e.g. a list of electable candidates or a list of votable options, each being associated with a respective marking region that a voter can mark to indicate his or her choice.

Preferred voting aids comprise a structure comprising a plurality of ballot marking aids, preferably arranged in a column, i.e. a one dimensional linear array, in a vertical or top-to-bottom direction of the voting aid. The ballot marking aids are spatially arranged to match the spatial arrangement of ballots on a ballot paper such that, when the voting aid is overlaid on the ballot paper, a respective ballot marking aid overlies a respective ballot, or markable voting option, on the ballot paper. Each ballot marking aid includes, or is configurable to include, an aperture, window or other exposure means that is in register with the respective marking region of the respective ballot and which exposes the respective marking region to allow a user to mark the respective ballot, i.e. to select the respective voting option by marking it. In preferred embodiments, each marking aid carries or otherwise includes an indicator (preferably a corresponding numeral and/or a braille representation of the corresponding numeral or other tactile indicator), or other identification means, of its position in the array, from first to last in sequence, preferably whereby the topmost marking aid is denoted as first and the bottommost marking aid is denoted as last.

In the embodiment of Figures 1 to 5, each ballot marking aid of the voting aid 11 comprises an aperture 12, or window, that overlies a corresponding ballot, or markable voting option, of the ballot paper when the voting aid 11 is placed on top of the ballot paper. In particular, each aperture 12 is in register with the marking region of the respective ballot. The apertures 12 permit an elector (not shown) to mark the ballot paper through the apertures 12. The apertures 12 are preferably spatially arranged to match a standardised ballot paper. The apertures 12 are typically arranged in a one dimensional linear array that is oriented in a vertical, or top-to-bottom, direction of the voting aid. This linear arrangement matches the sequential vertical linear arrangement of the ballots on a typical ballot paper, for example a ballot paper typically used for UK or Irish voting purposes. **It** should be understood that the apparatus may be adapted for use with ballot papers having different formats/layouts.

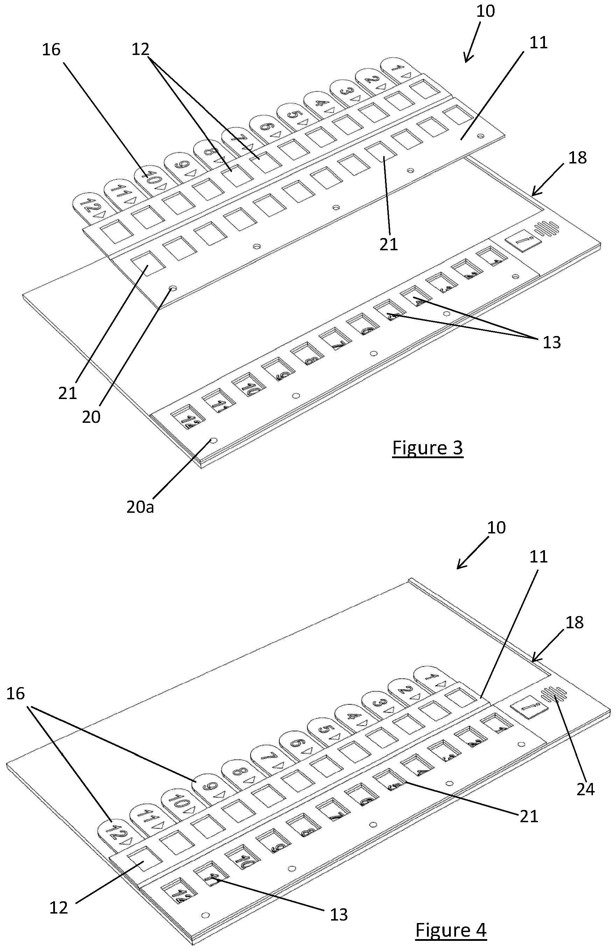

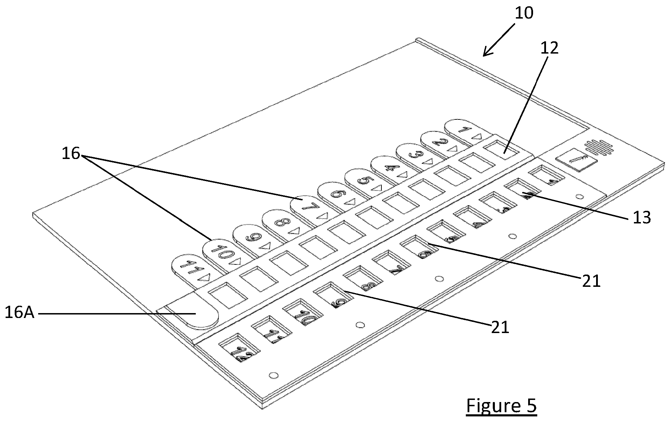

The preferred voting aid 11 comprises a respective securing element 16 for securing the respective aperture 12. In the embodiment of Figures 1 to 5, the securing elements 16 take the form of tabs 16 which are foldable, rotatable or otherwise movable between an open configuration in which the aperture 12 is uncovered or exposed, and a closed configuration in which the respective aperture 12 is covered. When the aperture, or window, is covered it is secured at least in the sense that the respective ballot, or markable voting option, cannot inadvertently be marked. Other means for selectably exposing the ballot, e.g. any suitable foldable, slidable, hinged or otherwise movable structures, may be used instead of tabs. In the example of Figures 4 and 5, all of the tabs 16 are shown in the open configuration except for tab 16A in Figure 5 which is shown in the closed configuration. The tabs 16 permit the elector to cover each aperture 12 individually after the respective underlying ballot is marked. This permits an elector with a visual impairment to mark a ballot paper having multiple ballots, and by moving each tab 16 to the closed configuration as ballots are marked, the elector may easily identify ballots which have been already marked. Alternative securing means are discussed herein in relation to different embodiments, however it should be understood that the securing means of one embodiment would be equally applicable to other embodiments. The term ballot paper, when used herein, refers to an entire voting ballot paper which may contain multiple candidate names, questions to be answered, or otherwise provide voting options thereon. Reference to a ballot refers to a single candidate name, question to be answered, or voting option as presented on a ballot paper.

Conveniently, each tab 16 carries the respective position indicator (a numeral in the illustrated example), or other identification means, for the respective marking aid, or row, of the voting aid.

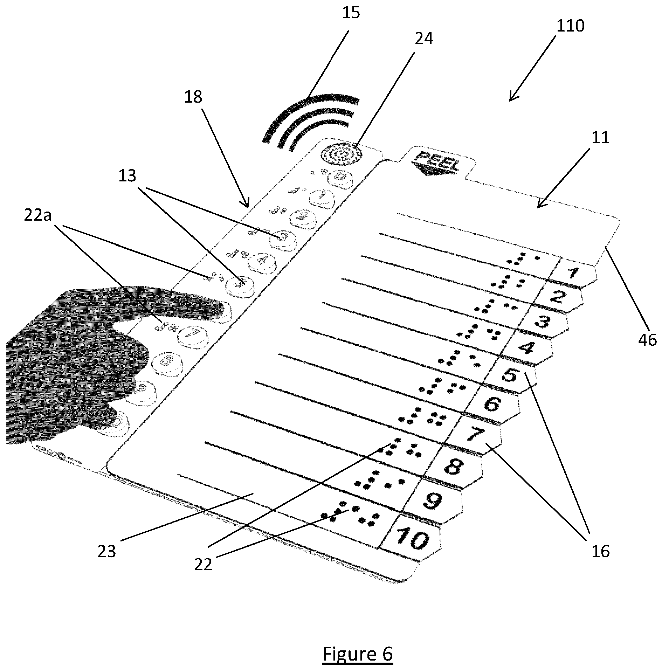

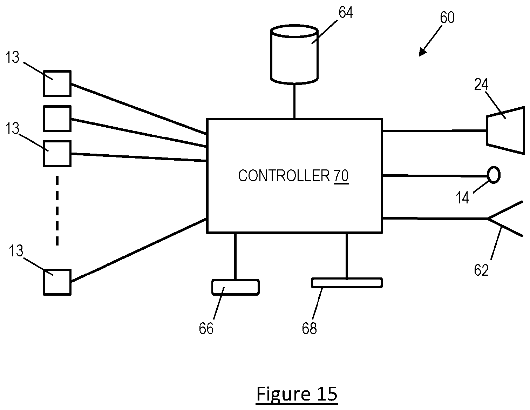

The voting apparatus 10 includes an audio system for rendering ballot information audibly to the user. The ballot information may for example any relevant information identifying and/or relating to the respective voting option, e.g. the respective candidate's name, and optionally their political party. Figure 15 shows, generally indicated as 60, an embodiment of the audio system. The audio system 60 comprises user activation means and audio output means. The audio output means preferably comprises any one or more of a loudspeaker 24, an audio jack 14 (or other audio port, e.g. a USB port) and/or a wireless transmitter 62, and may optionally comprise headphones or earphones (not shown) connected to the jack/port 14 or in wireless communication with the transmitter 62. In use, the loudspeaker 24 renders an audio signal 15 (Figure 6) comprising the relevant ballot information in the form of speech (recorded speech or synthesised speech as is convenient). Alternatively, or in addition, the audio jack/port 14 enables connection of headphones or earphones (not shown) or other audio rendering device to the voting apparatus to allow the relevant ballot information to be rendered audibly by the headphones/audio rendering device. Alternatively or in addition, the wireless transmitter 62, for example comprising a Bluetooth (trade mark) transmitter, enables wireless transmission of signals comprising the relevant ballot information to compatible wireless headphones or other audio rendering device for rendering thereby.

The activation means comprises a plurality of user activation devices 13. Each user activation device 13 may for example comprise a push button, a touch-sensitive button (e.g. a region of a touch-sensitive screen), or other user input device (typically comprising a switch device), preferably a touch-operated user input device (more preferably an input device that is operable by touch of a user's finger), as is convenient. A respective activation device 13 is provided for each ballot, or voting option. Preferably, the activation devices 13 are spatially arranged to match the spatial arrangement of the ballot marking aids, including the apertures 12 in the embodiment of Figures 1 to 5, and therefore also the spatial arrangement of the ballots on the ballot paper. In preferred embodiments, the activation devices 13 are arranged in a one dimensional linear array that is oriented in a vertical, or top-to-bottom, direction of the apparatus 10. Optionally, each activation device 13 is associated with identification means in the preferred form of an indicator (preferably a corresponding numeral and/or a braille representation of the corresponding numeral or other tactile indicator (e.g. a formation(s) that is raised or embossed) of its position in the array, from first to last in sequence, preferably whereby the topmost marking aid is denoted as first and the bottommost marking aid is denoted as last. The respective position indicator may be provided on the activation device 13 itself and/or on any convenient part of the apparatus 10 adjacent the respective device 13.

The preferred audio system 60 includes an electronic storage device 64 for storing audio files. Any conventional electronic memory that allows audio files to be stored and retrieved can be used for this purpose. The preferred audio system 60 includes audio input means for enabling audio files to be received by the system 60. The audio input means may take any conventional form, for example a hardware interface such as a cable or device port 66 and/or a memory card slot 68, and/or a wireless receiver (e.g. a Bluetooth (trade mark) receiver). Optionally, an RF transceiver may be provided for performing both wireless transmission and reception as required.

The audio system 60 includes a controller 70 for controlling the operation of the audio system 60 as described herein. The controller 70 may take any conventional form, for example comprising a suitably programmed microprocessor, microcontroller or integrated circuit, and any ancillary drivers, interfaces or circuitry that may be required and as would be apparent to a skilled person.

The voting apparatus 10 comprises a body 18 in which the activation devices 13 are incorporated. The other components of the audio system 60 may be incorporated in, supported by or housed by the body 18 as is convenient, typically including an electric power supply such as one or more batteries. Optionally, the body 18 includes a portion 19, preferably including a flat surface, that is shaped and dimensioned to receive a ballot paper, and preferably the voting aid 11 which is locatable on top of the ballot paper.

In use, the audio system 60 receives audio file(s) via the audio input means and stores the file(s) on the storage device 60. In preferred embodiments a respective audio file is provided for each ballot, or voting option, on the ballot paper for a given election or other contest, e.g. referendum. Alternatively, a single audio file may be provided containing respective audio data for each ballot, or voting option,, in which case it is preferred that the audio system 60 is configured to store the respective audio data as a respective audio file. In any event, the audio system 60 receives and stores respective audio data for each ballot, or voting option,. Each stored audio file comprises data for audibly rendering information (e.g. candidate name or other selectable choice), in the form of speech, corresponding to the respective ballot, or voting option, via any one or more of the available audio outputs 14, 24, 62. In preferred embodiments, the audio files comprise speech data, e.g. recorded human speech or synthesised speech. In alternative embodiments, the audio system 60 may include a conventional speech synthesis module and may be configured to synthesise speech data from data received via the input means.

Each stored audio file is uniquely associated with a respective activation device 13. This may be achieved in any suitable manner. Typically, each received audio input file includes data indicating which ballot, or voting option, it is associated with. The audio system 60 associates a unique identifier with each activation device 13, the unique identifier indicating the position of the activation device 13 in the array of devices 13. The order of the activation devices 13 in the array corresponds to the order of ballots on the ballot paper and so the audio system 60 matches each audio file to a corresponding activation device 13.

In response to operation of any one of the activation devices 13, the audio system 60 is configured to play the corresponding audio file, thereby rendering to the user, or elector, via the audio output means an audible rendition of the corresponding ballot information in the form of speech (recorded or synthesised). Therefore, an elector with a visual impairment is provided with audio information corresponding to a selected ballot, or voting option, and may thus mark the ballot, or voting option, based on the audio information without assistance.

In preferred embodiments, the controller 70 receives a signal in response to operation of the activation device 13 in response to which the controller 70 causes the corresponding audio file to be played. The controller 70 retrieves the relevant audio file from the storage device 64 and causes it to be rendered by the loudspeaker 24 and/or sent to the jack/port 14 and/or to be transmitted wirelessly, as applicable. More generally, it will be understood that there are a variety of suitable conventional ways in which playback of an audio file corresponding to an operated activation device 13 can be implemented.

In the embodiment of Figures 1 to 5, the activation devices 13 are buttons, and each button 13, when activated, causes a respective candidate name (and/or other information as applicable) to be audibly rendered to the user as the audio file associated with the pressed button 13 is played. Therefore, an elector with a visual impairment may be presented with an audio recitation of the candidate names, and can relate a particular name to a particular button 13.

In preferred embodiments, the support portion 19 of the body 18 has a flat surface for receiving the voting aid 11. In use, a ballot paper is located between the upper surface of support 19 and the voting aid 11. In alternative embodiments, the support portion 19 may be omitted in which case the ballot paper overlaid with the voting aid 11 may be located side-by-side with the body 18. In either case, the body 18 and voting aid 11 are aligned with each other so that each marking aid of the voting aid 11 is aligned with, preferably adjacent to, a respective one of the activation devices 13. The preferred arrangement is such that the first marking aid is aligned with the first activation device 13, the second marking aid is aligned with the second activation device 13 and so on. Preferably the apparatus 10 includes alignment means to facilitate correct alignment of the activation devices 13 and the marking aids. In the embodiment of Figures 1 to 5, aligning the activation devices 13 with the marking aids involves aligning the buttons 13 with the apertures 12. Conveniently, the alignment means is configured to align the voting aid 11 with the body 18.

Alignment of the voting aid 11 with the buttons 13 may be achieved in any convenient manner. For example, the alignment means may comprise correspondingly located alignment structures 20, 20a (e.g. a hole or recess and corresponding locating pin, or other corresponding formations, e.g. corresponding male and female components) formed on the voting aid 11 and the body 18 such that mating or engagement of the alignment structures 20, 20a ensures the required alignment.

Optionally, fastening means (e.g. adhesive or hoop & loop fasters) may be provided for holding the voting aid 11 in the desired location with respect to the activation devices 13.

In the embodiment of Figures 1 to 5, as is best seen in Figures 4 and 5, once the voting aid 11 is in place, the apertures 12 of the voting aid 11 are not only aligned with the respective button 13, but are advantageously also adjacent or proximal the respective button such that a elector can easily ascertain, by touch, which aperture 12 corresponds to which button 13. Alternatively, or in addition, each marking aid of the voting aid 11 may include a tactile guide (e.g. a ridge or other structure(s) or guide means, preferably being tactile, e.g. raised or embossed) which, when the voting aid 11 is aligned with the activation devices 13, extends between the respective activation device 13 and window/aperture 12 (or other voting option exposure means) and so allows the elector, by touch e.g. using a finger, to trace a path from the activation device to the respective window/aperture 12.

Optionally, the voting aid 11 comprises a respective secondary aperture 21 for each activation device 13. The secondary apertures 21 be arranged in parallel with the apertures 12. The secondary apertures 21 are spatially arranged to match the spatial arrangement of the activations devices 13, and therefore preferably also the spatial arrangement of the apertures 12. In preferred embodiments therefore, the secondary apertures 21 are arranged in a one dimensional linear array that is oriented in a vertical, or top-to-bottom, direction of the apparatus 10. The voting aid 11 is placed on the apparatus 10 such that each secondary aperture 21 overlays and is in register with a respective one of the activation devices 13. The aperture 21 exposes the respective activation device 13 so that it can be operated through the aperture 21. The apertures 21 are preferably located on the opposite side of the apertures 12 to the tabs 16. The array of apertures 21 facilitates installation, alignment and use of the voting aid 11.

In use, when the elector operates an activation device 13 and hears a choice that he wishes to vote for, he marks the corresponding ballot on the ballot paper through the window 12 in the voting aid 11 that is aligned with the operated device 13. This is facilitated in the embodiment of Figures 1 to 5 by the respective window/aperture 12 being immediately adjacent the respective device 13. Once the ballot paper is marked, the respective tab 16, which is also advantageously located beside the aperture 12, can be folded or otherwise closed to secure the ballot.

Figures 6 to 8 show a second embodiment of the apparatus 110 which is similar to the apparatus 10 and in respect of which like numerals are used to denote line parts and the same or similar description applies, unless otherwise indicated, as would be apparent to a skilled person. In this embodiment, the voting aid 11 does not overlie the activation devices 13. Instead, the voting aid 11 is located adjacent the array of activation devices 13. The voting aid 11 of the second embodiment is arranged to provide the apertures, or windows, distal the activation devices 13 rather than proximal the activation devices 12 as is the case in the first embodiment. The windows 12 need not be enclosed on four sides such as the apertures as described in relation to the first embodiment. Instead, the windows 12 may be formed in any manner by the shape and/or dimensions of the voting aid 11 in order to expose the respective marking region of the ballots when a ballot paper 72 is beneath the voting aid. For example, the windows 12 may be formed on, and open to, an edge of the voting aid 11 such that only three sides, or fewer, of the window 12 are enclosed, and may for example be formed by one or more cut out potion at the edge the voting aid, or by selecting the width of the voting aid such that the marking regions are exposed along its edge. The windows 12 may be provided by forming one elongate recess or cut-out along an edge of the voting aid, said elongate window being open to the said edge. Preferably, each ballot marking aid of the voting aid includes a tab 16 at the end distal the devices 13. Each securing element, in the preferred form of tab 16, covers the respective marking region of the respective ballot when the voting aid 11 is overlaid on the ballot paper 72 and may be lifted or folded to expose the respective marking region.

Each marking aid of the voting aid 11, and each activation device 13, preferably have corresponding position indicator(s) or other identification means (as described above), preferably tactile indicators, to allow each marking aid to be correlated with the respective activation device. Preferably, the position indicator 22 of the voting aid is located adjacent the marking region of the respective ballot, e.g. adjacent the respective window 12, tab 16 or other exposure means, and/or on the respective tab 16. The position indicator 22a of each activation device 13 may be provided on the activation device 13 and/or on the body 18 adjacent the activation device 13.

As can be seen in Figure 6, in the preferred embodiment the indicators 22, 22a comprise braille identifications. The respective first and second indicators 22, 22a are preferably identical and may represent a number in braille. An elector with a visual impairment may locate the indicator 22a corresponding to a button 13, activate the identified button 13, and after hearing an audio output locate the corresponding window 12 by means of the corresponding indicator 22, and mark the underlying ballot (after lifting or folding back the respective tab 16 in this example). **It** should be understood that the identification features 22, 22a could take any form which would aid a visually impaired individual to identify a match between a button 13 and a corresponding tab16/window 12, for example raised tactile roman numerals, tactile and distinct shapes etc. Alternatively or in addition tactile guides may be provided as described above.

The securing elements 16 of the embodiment of Figures 6 to 8 are arranged such that, prior to voting/marking an underlying ballot paper, the securing elements cover the marking region of the respective ballot. An elector, after identifying the relevant ballot as outlined above, may fold the securing element 16 towards the upper surface 23 of the voting aid to reveal the ballot thereunder such that it may be marked. The securing element 16 may then be left in the folded state to indicate that the ballot thereunder has been marked. The securing elements 16 conveniently take the form of a tab 16 associated with the respective window 12, as described in relation to the first embodiment.

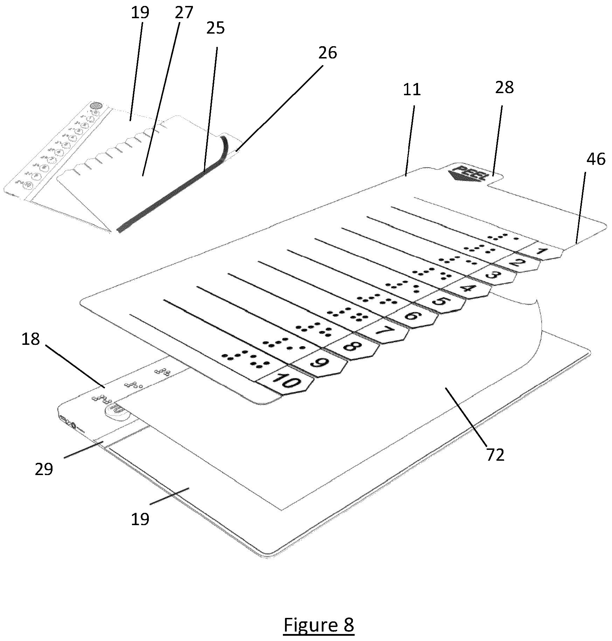

The voting aid 11 may be attachable to the body 18 via an adhesive attachment element 25, 26 (Figure 8). Preferably, the adhesive attachment element is provided on a rear surface 27 of the voting aid 11, said rear surface 27 being the surface received by the upper surface 19 of the body 18 when in use. As is best viewed in Figure 8, the adhesive attachment element preferably comprises a peel and stick arrangement comprising an adhesive strip 26 covered by a protective non-adhesive covering 25. To attach the voting aid 11 to the support, the protective covering 26 is removed to expose the adhesive strip 25 and the adhesive strip is then placed on a surface of the body 18 to provide an adhesive attachment between the body 18 and the rear surface 27 of the voting aid 11.

Alignment features may be provided to guide alignment of the voting aid 11 and/or ballot paper relative to each other and to the body 18. The body 18 may also comprise an adhesion portion 29 to which the adhesive strip 25 may adhere. The adhesion portion may itself be adhesive, or may simply provide a suitable surface to which the adhesive strip may adhere. The adhesion portion is ideally located parallel to a longitudinal edge of the body 18 and proximal the side of the body 18 comprising the buttons 13. As can be seen in Figure 8, a removal tab 28 is provided to permit the voting aid 11 to be removed from the body 18 by pulling on the removal tab 28 such that the voting aid 11 is peeled from the body 18. Alignment features may be those as described for the first embodiment or the hereinafter described third embodiment, or may be ridges/ledges formed on the body 18 against which the ballot paper and/or voting aid 11 may abut, visual alignment features, or any other such alignment features which would be known to the person skilled in the art. The ballot paper receiving portion 19 of the body 18, if present, may comprise a non-slip surface such that the ballot paper and/or the voting aid are encouraged to remain in place thereon.

The apparatus 10, 110, may comprise a power source such as a battery. The battery is preferably a rechargeable battery. In use, an elector presses a button 13 and is presented with corresponding ballot information in an audio format, the information being related to the ballot, or voting option, which underlies the marking aid aligned with the pressed button 13. The elector may then proceed to locate the window 12 or tab 16 which corresponds to the pressed button 13, either due to its positioning relative to the button 13, and/or by using matching identification features provided in relation to the button 13 and the associated window or tab. Once the relevant window or tab is identified, the elector may then mark the underlying ballot. The elector may continue this process for other items on the ballot paper, each which will have a different corresponding and aligned window 12 and button 13.

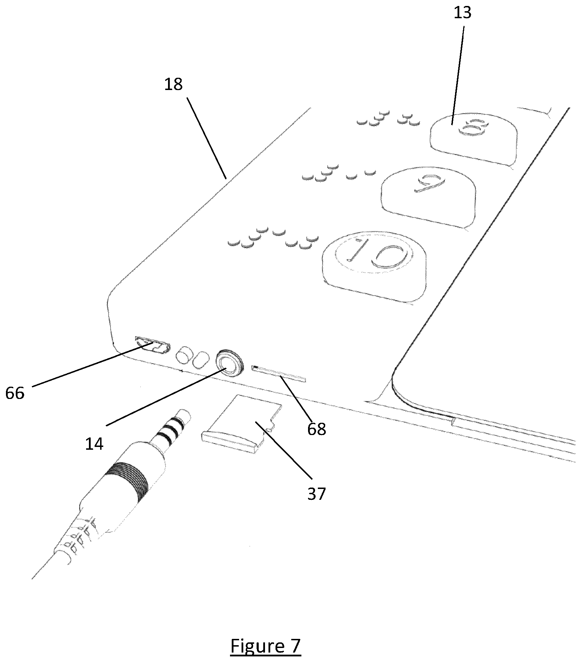

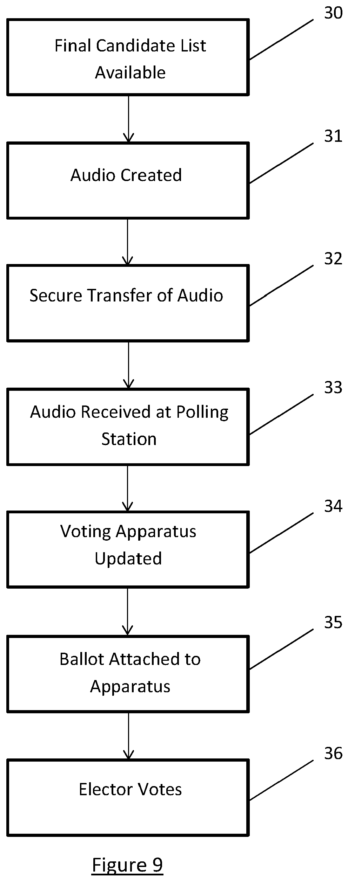

Figure 9 illustrates a typical process from finalisation of a ballot to voting by an elector. After the contents of the ballot paper are finalised at step 30, one or more audio files are created to represent the ballot paper at step 31. **It** should be understood that the term audio file could also refer to a collection of audio files. This could for example be a file containing each of the candidate names as listed on a ballot paper. The audio file could be created by recording an audio source such as a person reading said names, could be generated automatically via speech synthesis from an electronic or paper version of the ballot paper, or by any other means as would be known to the skilled person. The audio file may also contain further information or be accompanied by information relating to portions of which should be associated with which button of the voting apparatus. At step 32, the audio file is securely transferred to a polling station and received at said polling station at step 33. The transfer and reception can be physically accomplished by the sending of a physical memory storage device, such as an SD Card as shown in Figure 7 comprising the audio files, or could be done across a telecommunication network, e.g. the internet. At stage 34, the voting apparatus is updated with the audio file. This may be done by physically connecting a memory storage device to the voting apparatus, or could be done automatically as the voting device receives the audio files across a communication network/the internet. As described above, the audio file may contain or be accompanied by information relating to which portions of the audio file relate to which button of the voting apparatus. The voting apparatus may also comprise software stored on a memory element, and when said software is run by a processor of the voting apparatus, an incoming audio file, or portion of an incoming audio file, is associated with a particular button based upon a marker which accompanies said audio file or portion thereof. Alternatively, the ordering of the audio files, or portions thereof, dictates the association with the correct corresponding buttons 13. Once the voting apparatus is updated with the audio file, the ballot paper is attached to the voting apparatus and the elector may use the apparatus to vote/mark the ballot paper.

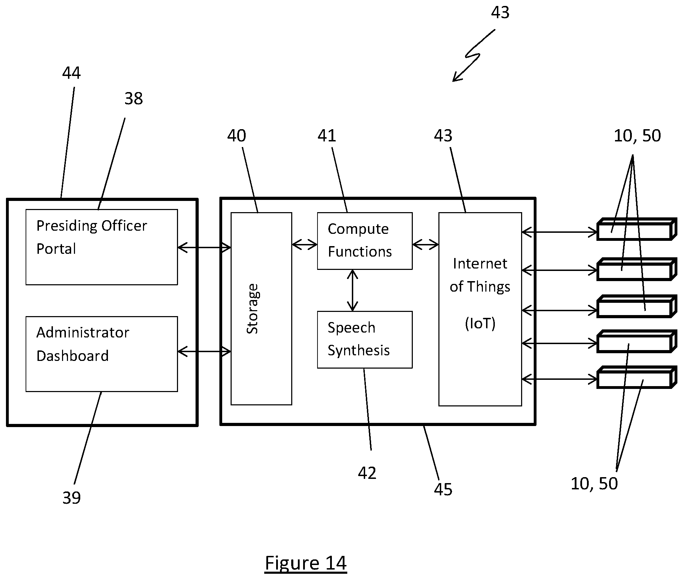

Figure 14 shows one example of a system 43 which may be utilised to implementing the process of Figure 9. The system 43 provides a presiding officer portal 38 which may be used by a presiding officer to input and confirm polling data, approve the subsequent speech synthesis, and access required support. Also provided is an administrator dashboard 39 which may be utilised by an administrator to, for example, create and manage polls, generally monitor the system, provide user support, or contact users. The presiding officer portal 38 and Administrator dashboard may be accessed and managed via a web based system 44. Storage 40 is provided to store all data and information required by the system. Preferably, the storage 40 is secure managed cloud storage which comprises the advantages of being readily available, secure, durable, and scalable. The system further comprises a speech synthesis function 42 which accurately converts text to human like synthesized speech. An internet of things (IoT) function is provided such that suitable connected voting apparatus 10, 110 may be managed and updated by the system 43. Compute functions 41 act to operably integrate elements of the system such as the speech synthesis function, storage, and internet of things function 43. Preferably, the storage 40, compute functions 41, speech synthesis function 42 and Internet of Things function 43 are all implemented in a cloud based computing platform/service 45. This is just one example of a system that may be used to manage and update the voting apparatus, however it should be understood that implementation of the system could be accomplished in a variety of ways within the knowledge of the skilled person. It should also be understood that the aforementioned functions may be implemented on modules of the system.

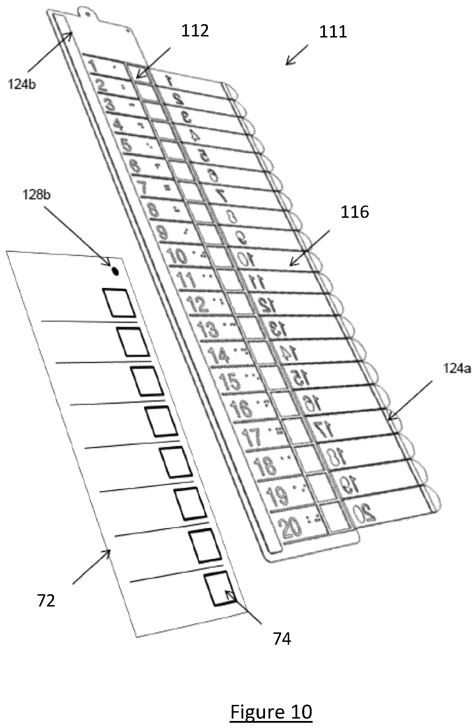

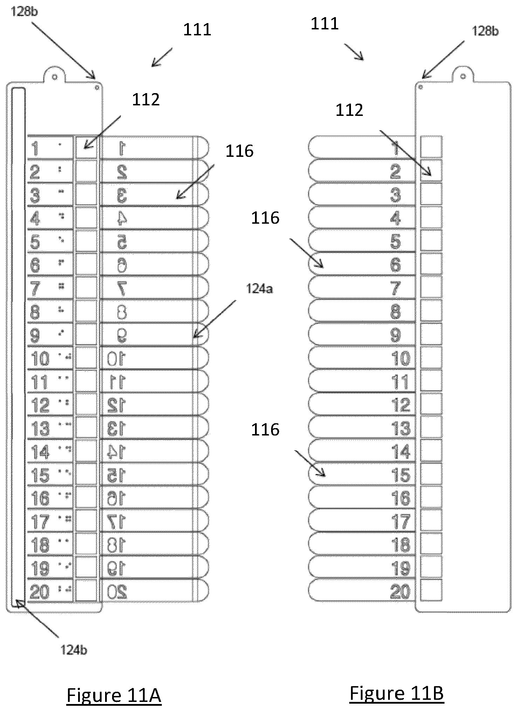

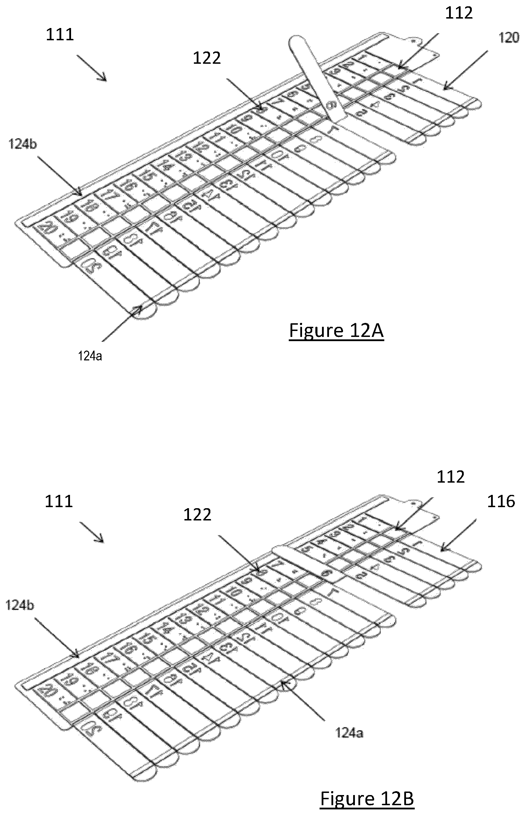

Figures 10 to 13 illustrate a third embodiment of a voting aid 111 that is suitable for use with voting apparatus embodying the invention. The voting aid 111 as described in relation to figures 10 to 13 may be utilised with the apparatus 10, 110 of the first and second embodiments and is interchangeable with the other voting aids as herein described. The voting aid 111 is configured to receive a ballot paper 72 comprising at least one ballot, or voting option, 74. The voting aid 111 comprises at least one aperture 112. The at least one aperture 112 is arranged to overlie the at least one ballot 74 of the ballot paper 72. The voting aid 111 also comprises respective identification means 122, e.g. an indicator as described above in relation to the other embodiments) to allow the respective window or aperture 112 to be identified; securing means 116 to allow the at least one aperture 112 to be secured; and optionally indicating means 124a, 124b to indicate the at least one aperture 112 is secured.

Typically, the ballot paper 72 comprises a plurality of ballots, or voting options 74. The plurality of ballots 74 can be arranged sequentially on the ballot paper 72, and normally the plurality of ballots 74 is arranged sequentially in a linear arrangement on the ballot paper 72. In such a case, the voting aid 111 comprises a plurality of apertures 112. Each aperture 112 is arranged to overlie each respective ballot 74 of the ballot paper 72. In such an embodiment, the plurality of apertures 112 is arranged sequentially in a linear arrangement on the voting aid 111.

In an embodiment, the identification means 122 are visual identification means to allow the at least one aperture 112 to be visually identified. For example, the identification means 122 can be visual indicia that allow the at least one aperture 112 to be visually identified. In such an embodiment, the identification means 18 can be printed indicia applied to the (surface of the) voting aid 111. Preferably, the printed indicia circumscribe the at least one aperture 112. The identification means 122 can optionally or additionally comprise any indicia capable of identifying an aperture 112, and preferably capable of identifying an aperture 112 from another aperture 112'. In a preferred embodiment, the indicia are Roman numerals, preferably sequential roman numerals. The indicia can optionally or additionally be Braille numerical characters, preferably sequential Braille numerical characters or Braille numerical characters corresponding to the Roman numeral indicia or other tactile indicator.

The identification means 122 are preferably tactile identification means to allow the at least one aperture 112 to be tactilely identified. For example, the identification means 122 can be tactile indicia to allow the at least one aperture 112 to be tactilely identified. In such an embodiment, the identification means 122 can be raised dimples embossed from the (surface of the) voting aid 111. Preferably, the raised dimples circumscribe the at least one aperture 112. In a preferred embodiment, the raised dimples are arranged to define Roman numerals, preferably sequential roman numerals. The raised dimples can optionally or additionally be arranged to define Braille numerical characters, preferably sequential Braille numerical characters or Braille numerical characters corresponding to the Roman numerals.

In a preferred embodiment, the identification means 122 are visual and tactile (visio-tactile) identification means to allow the at least one aperture 112 to be both visually and tactilely identified. In such an embodiment, the at least one aperture 112 can be simultaneously visually and tactilely identified, thereby increasing the accuracy of identification. Preferably, the identification means 122 are raised dimples embossed from the (surface of the) voting aid 111 and having printed indicia applied to the raised dimples.

The securing means 116 can be physical securing means to allow the at least one aperture 112 to be physically secured. In an embodiment, the securing means 116 comprise a tab or cover arranged to occlude the at least one aperture 112. Preferably, the securing means 116 comprise a cover arranged to reversibly occlude the at least one aperture 112, to allow the at least one aperture 112 to be covered once a ballot is marked. The securing means 116 can be mountable to the voting aid 111 and, in a preferred embodiment, the securing means 116 are hingedly mountable to the voting aid 111, or foldable. In a specific embodiment, a cover is hingedly mountable to the voting aid 111. However, any arrangement or mounting that allows the securing means 116 to reversibly occlude the at least one aperture 112 can be used. For example, the securing means 116 can be slidably mountable to the voting aid 111.

The securing means 116, such as the cover, are preferably mountable adjacent the at least one aperture 112 to allow the securing means 116 to easily occlude the at least one aperture 112. The securing means 116, for example the cover, can be hingedly mountable adjacent the at least one aperture 112.

In an embodiment, to provide reversible occlusion of the at least one aperture 112, the securing means 116, for example the cover, are arranged to be displaceable between an open position and a closed position. In the open position, the securing means 116 do not occlude the at least one aperture, such that the elector has access to the at least one ballot 74 on the ballot paper 72 beneath the voting aid 111, and so can mark a choice of vote accordingly. In the closed position, the securing means 116 occlude the at least one aperture 112, thereby providing security to the elector that a ballot 74 has been marked. Once the securing means 116 are in the closed position, the elector cannot access the at least one aperture 112 and so cannot mark the ballot 74.

The indicating means 124a, 124b may be tactile indicating means to tactilely indicate that the at least one aperture 112 is secured. The indicating means 124a, 124b can optionally or additionally be audible indicating means to audibly indicate that the at least one aperture 112 is secured. In a preferred embodiment, the indicating means 124a, 124b are audible and tactile (audio-tactile) indicating means to both audibly and tactilely indicate that the at least one aperture 112 is secured.

The indicating means can 124a, 124b comprise first 124a and second 124b sections arranged such that contact of the first section 124a with the second section 124b provides an audible indication, such as an audible sound. The first 124a and second sections 124b can be formed from a material that generates an audible sound when brought in contact with the same or a different material. For example, the first 124a and second sections 124b could be formed from a metal material that generates an audible "ding" sound when the first 124a and second sections 124b are brought in contact. In an alternative embodiment, the first 124a and second sections 124b form part of an electrical circuit, wherein the electrical circuit comprises a source of power, such as a battery cell, and a sound generator that generates an audible sound when the first 124a and second sections 124b are brought in contact and so complete the electrical circuit. In a similar embodiment, the first 124a and second sections 124b form part of an electrical circuit, wherein the electrical circuit comprises a source of power, such as a battery cell, and a light generator, such as a light emitting diode (LED), that generates a visual cue when the first 124a and second sections 124b are brought in contact and so complete the electrical circuit. Both the sound generator and the light generator can be arranged in the same electrical circuit to provide audio-visual indicating means.

In a preferred embodiment, the indicating means 124a, 124b comprise first 124a and second 124b sections arranged such that separation of the first section 124a from the second section 124b provides an audible indication, such as an audible sound. The above-mentioned electrical circuit comprising the sound generator and/or the light generator can be arranged to provide audio-visual indicating means, wherein the light and/or sound generators are arranged to generate a visual and/or audible cue when the first 124a and second sections 124b are separated from being in contact and so switching the electrical circuit.

The first section 124a can be mountable to the second section 124b, and preferably the first section 124a is reversibly mountable to the second section 124b. In certain embodiments, the first section 124a is engageable with the second section 124b, and preferably the first section 124a is reversibly engageable with the second section 124b.

In a preferred embodiment as shown in the drawings, the first section 124a comprises a plurality of hooks, and the second section 124b comprises a plurality of loops. The first 124a and second 124b sections thereby together form a reversible hook-and-loop fastening. In an alternative embodiment, the first section 124a comprises a head and the second section 124b comprises a shank arranged to reversibly receive the head of the first section 124a, thereby together forming a reversible snap fastening.

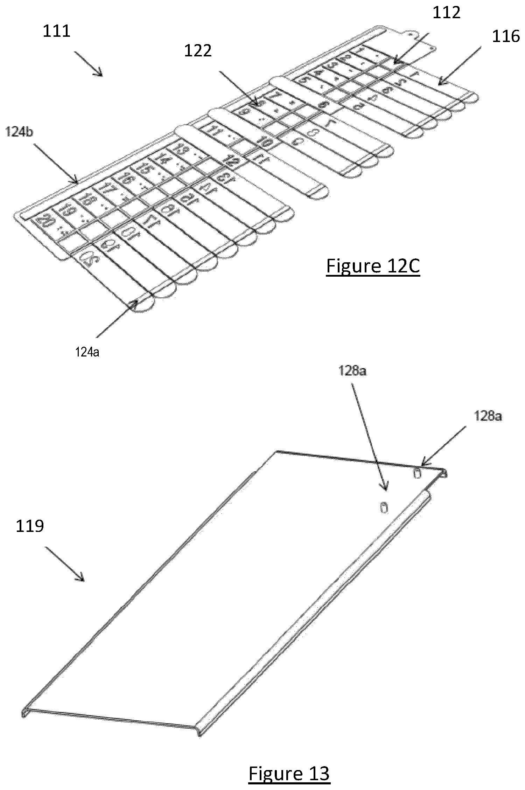

Referring to Figure 13, there is shown a support 119 for a ballot paper. In a preferred embodiment, the device 111 further comprises the support 119. The support 119 is preferably a solid, generally planar support, and can be formed from any material that can impart the required mechanical support to the ballot paper 72 and/or the device 111, for example aluminium or acrylic.

The support 119 comprises alignment means 128 for aligning a ballot paper 72 and/or the device 111. The alignment means 128 can comprise a first mating element 28a, which first mating element 128a is arranged to correspond with a respective second mating element 128b of the ballot paper 72 and/or of the device 111. The alignment means 128 of the support 119 can comprise any number of first mating elements 128a, each first mating element 128a arranged to correspond with a respective second mating element 128b of the ballot paper 72 and/or of the device 111. In an embodiment, the alignment means 128 comprise a protrusion 128a arranged to correspond with a respective aperture 128b of the ballot paper 72 and/or of the device 111. In a preferred embodiment, the alignment means 128 comprise two (a pair of) protrusions 128a, each protrusion 128a arranged to correspond with a respective aperture 128b of the ballot paper 72 and/or of the device 111. The shape and/or dimension of each first and second mating element of the arrangement means can be selected by a person skilled in the art. For example, as an alternative to a corresponding protrusion and aperture, the first and second mating element of the arrangement means can be a corresponding radius (rounded) corner and concave (rounded) channel, or a corresponding die cut and chamfer edge.

The pair of protrusions 128a is arranged to be received within the respective pair of apertures 128b of the ballot paper 72 and of the device 111. In use, the ballot paper 72 overlies the support 119. The or each protrusion 128a of the support aligns with and is received within a corresponding aperture 128b of the ballot paper 72. The device 111 then overlies the ballot paper 72 and support 119. The or each protrusion 128a of the support aligns with and passes through the corresponding aperture 128b of the ballot paper 72, and aligns with and is received within a corresponding aperture 128b of the device 111; thereby ensuring that the ballot paper 72 and the device 111 are aligned for use.

When voting, once an elector has accessed the at least one ballot 74 on the ballot paper 72 beneath the voting aid 111 and has marked a choice of vote accordingly, and once the securing means 116 have been displaced to occlude the at least one aperture 112; the indicating means 124a, 124b will indicate to the elector if the securing means 116 are displaced to the open position thereby uncovering the at least one ballot 74, which has already been marked. The elector is alerted to the fact that the at least one ballot has been uncovered and thereby knows not to mark that ballot 74 again. In the preferred embodiment, if the elector has occluded/covered the ballot 74 with the securing means 124a, 124b, but accidentally uncovers the ballot 74, for example by inadvertently moving the securing means 116, the indicating means will provide audio-tactile indication that the securing means 116 have been moved and the already marked ballot 74 has been uncovered. In the preferred embodiment, the elector can readily hear the sound of the separation of the hook-and-loop fastener, and is immediately indicated that the securing means 116 have been moved. The elector thereby immediately knows that an already-marked ballot 74 has been uncovered and should not be marked again. The securing means 116 can be replaced into the closed position to ensure the already-marked ballot 74 is not marked again.

When voting, the elector is provided with a voting aid 111 and overlies the at least one ballot 74 with the at least one aperture 112. The elector identifies the at least one aperture 112 using the visio-tactile identification means 122; marks the at least one ballot 74; and secures the at least one aperture by occluding the at least one aperture 112, for example by displacing the securing means 116 from an open position to a closed position. The voting aid 111 indicates the at least one aperture 112 is secured, for example by separating the first 124a and second 124b sections of the indicating means 124a, 124b to provide an audible sound, such that the elector immediately knows that an already-marked ballot 74 has been uncovered and should not be marked again.

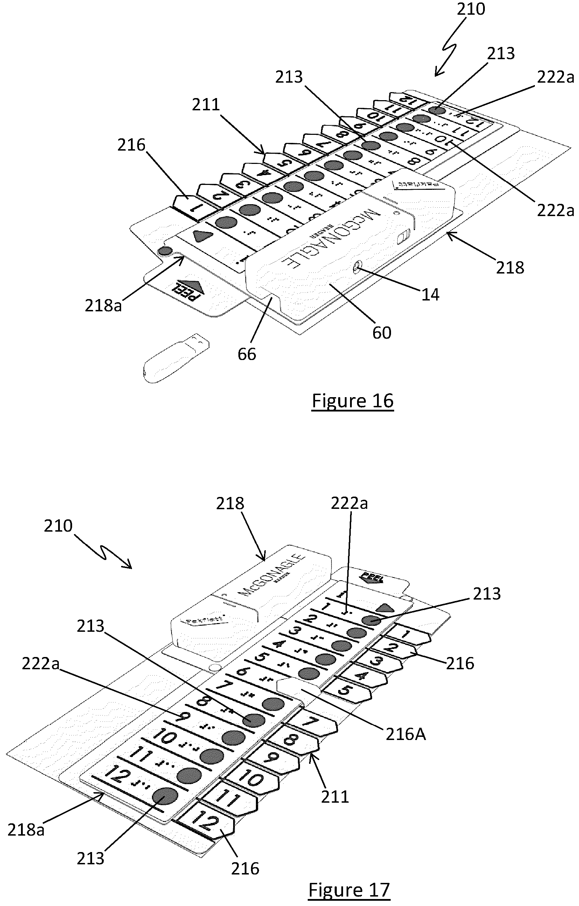

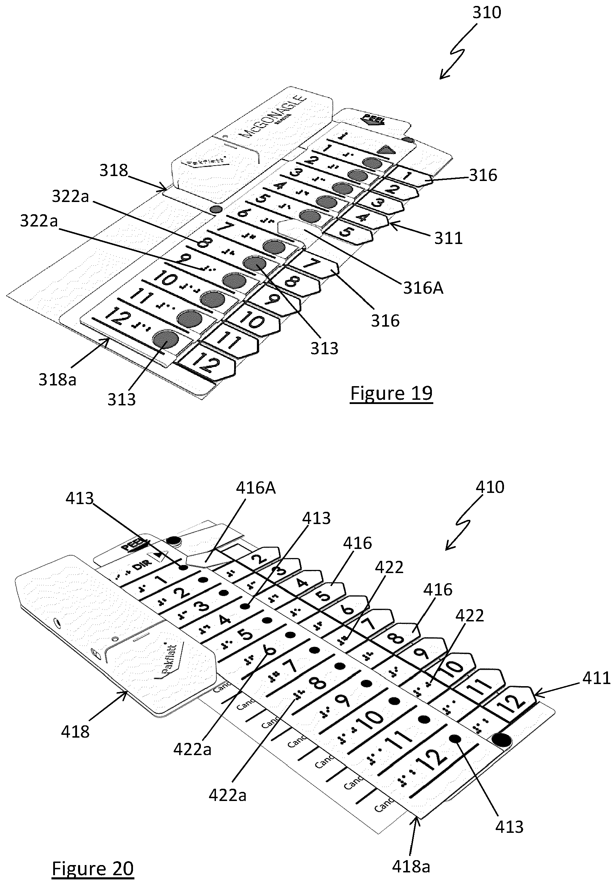

Figures 16 to 18 show a third voting apparatus 210 embodying the invention, while Figures 19 and 20 respectively show a fourth voting apparatus 310 and fifth voting apparatus 410 embodying the invention. The voting apparatus 210, 310, 410 are similar to the voting apparatus 10, 110, with like numerals being used to denote like parts and the same or similar description applying as would be apparent to a skilled person.

The voting apparatus 210, 310, 410 is configured to receive a ballot paper having at least one ballot, or voting option, and comprises a voting aid 211, 311, 411 for overlying the ballot paper. The voting aid 211, 311, 411 comprises a respective ballot marking aid for each ballot of the ballot paper. The voting apparatus 210, 310, 410 comprises an audio system 60 which may be the same or similar to the audio system 60 described hereinbefore, at least part of which may be incorporated into the body 218, 318, 418 of the apparatus 210, 310, 410.

The voting apparatus 210, 310, 410, more particularly the audio system 60, comprises a plurality of user activation devices 213, 313, 413, the configuration being such that, in response to operation of any one of the user activation devices 213, 313, 413, the audio system 60 is configured to provide the audio output for a respective one of the ballots, or voting options. The user activation devices 213, 313, 413 are typically provided on the body 218, 318, 418 of the voting apparatus 210. Preferably, there is respective user activation device 213, 313, 413 for each ballot or voting option.

The user activation devices 213, 313, 413 may be provided on a substrate 218a, 318a, 418a which may be part of the body 218, 318, 418. In use, the substrate 218a, 318a, 418a may overlie the voting aid 211, 311, 411, the arrangement being such that each activation device 213, 313, 413 is aligned with the respective ballot marking aid. In alternative embodiments, each user activation device may be provided on the respective voting aid.

The user activation devices 213, 313, 413, which may take any convenient form e.g. a button, switch or other user input device, are arranged for alignment with a respective ballot and/or with a respective ballot marking aid. Each activation device 213, 313, 413 preferably has one or more indicator 222a, 322a, 422a arranged for alignment with a respective ballot and/or with a respective ballot marking aid. The indicator 222a, 322a, 422a may be provided on the respective activation device, or adjacent the respective activation device, e.g. on the substrate 218a, 318a, 418a.

When the apparatus 210, 310, 410 is assembled, the voting aid 211, 311, 411 is located such that each ballot marking aid is aligned with or otherwise associated with a corresponding user activation device 213, 313, 413. The preferred arrangement is such that the respective user activation device 213, 313, 413 is adjacent, preferably immediately adjacent, the respective aperture, window or exposure means 12. By locating the respective activation device 213, 313, 413 adjacent, or laterally beside, the respective exposure means, it is relatively simple for the voter to correctly correlate each activation device with the corresponding exposure means, and therefore with the corresponding marking region during use.

Each ballot marking aid includes securing means 216, 316, 416 operable to selectively expose a marking region of the respective ballot, or voting option, and is typically operable to expose or cover the respective marking region. In preferred embodiments, the securing means 216, 316, 416 is operable between a ballot-exposing state in which it exposes the marking region of the respective ballot (when present), and a ballot-covering state (or ballot-securing state) in which it covers (or otherwise secures) the marking region of the respective ballot (when present). Preferably, the securing means 216, 316, 416 comprises a tab or other structure that is movable between the ballot-exposing state and the ballot-covering/securing state. Conveniently, the tab 216, 316, 416 or other structure is foldable between the ballot-exposing and ballot-covering/securing states, e.g. by means of a fold or hinge. In Figures 17, 19 and 20 all of the tabs 216, 316, 416 are shown in the ballot-covering state except tab 216A, 316A, 416A which is shown in the ballot-exposing state.

In preferred embodiments, in the ballot-exposing state, the securing means 216, 316, 416 is at least adjacent, and preferably overlaps with, the respective user activation device 213, 313, 413. The preferred arrangement is such that at least part of the securing means 216, 316, 416 overlies all or part of the respective activation device 213, 313, 413. The arrangement is such that, when the elector activates, e.g. presses, the activation device 213, 313, 413 when the corresponding securing means 216, 316, 416 is in its ballot-exposing state, the part of the securing means 216, 316, 416 that overlaps, overlies or is adjacent the activation device 213, 313, 413 is also touched by the elector, thereby providing tactile feedback to the elector that allows the elector to associate the activated device 213, 313, 413 (and therefore the rendered audio signal) with the exposed ballot. This arrangement reduces the likelihood that the elector will associate the wrong activation device 213, 313, 413 with an exposed ballot. For example, in use the elector may activate any given activation device 213, 313, 413 and, having listened to the corresponding audio signal, may decide that he or she wishes to mark the corresponding ballot. The elector may locate the corresponding tab 216, 316, 416 by any convenient means, e.g. by correlation of the respective location indicators and/or because of the alignment of the activation device 213, 313, 413 with the ballot marking aid of which the tab 216, 316, 416 is part, and/or because the activation device 213, 313, 413 is located adjacent the respective tab 216, 316, 416, and/or using the tactile guide means, as applicable. The elector may then move the corresponding tab 216, 316, 416 to its ballot-exposing state whereupon the elector may activate the activation device 213, 313, 413 that is now distinguished from the other activation devices 213, 313, 413 by presence of the tab 216, 316, 416. If no mistake has been made, the elector will hear the same audio signal which will confirm that he or she is marking the desired ballot. It will be understood that there are other ways in which the elector can use the apparatus 210, 310, 410. Advantageously, however, the tab 216, 316, 416, in its ballot-exposing state, distinguishes the respective activation device 213, 313, 413 to the elector's touch and/or may act as a guide for the elector's hand to the respective activation device 213, 313, 413, thereby helping to ensure that the elector makes a correct association between the activation device 213, 313, 413 and the respective ballot.

In alternative embodiments (not illustrated), in particular where the securing means is foldable or otherwise operable to cover the respective window aperture 12 after ballot marking (see for example the voting aid 11 of Figure 1), the arrangement may be such that the securing means overlaps with and/or overlies the respective activation device when in the ballot-covering/securing state rather than in the ballot-exposing state.

The tabs 216, 316, 416 of the voting apparatus 210, 310, 410 are foldable onto the respective activation device 213, 313, 413 and as such overlap with and overlie the respective device 213, 313, 413. The preferred arrangement is such that the tabs 216, 316, 413 cover (wholly or partly) the respective activation device 213, 313, 413 in the ballot-exposing state. Advantageously, the elector touches the tab 216, 316, 413 as he or she activates the respective activation device 213, 313, 413. This may be achieved by selecting the size of the tab to suit the distance between the tab and the activation device. It is preferred to locate the activation devices 213, 313, 413 adjacent, preferably immediately adjacent, the tabs 216, 316, 416, as for example is illustrated by the apparatus 210, 310. Alternatively, the respective indicators 422 may be located between the activation devices 413 and the tabs 416, as illustrated in Figure 20. In this case, the tab 416 may only partly overlap with the respective activation device 413 in the ballot-exposing state. Alternatively still, the arrangement may be such that the free end of the tab is adjacent but not overlapping with the respective activation device, but is sufficiently close that it is detectable by the elector's finger when activating the respective activation device.

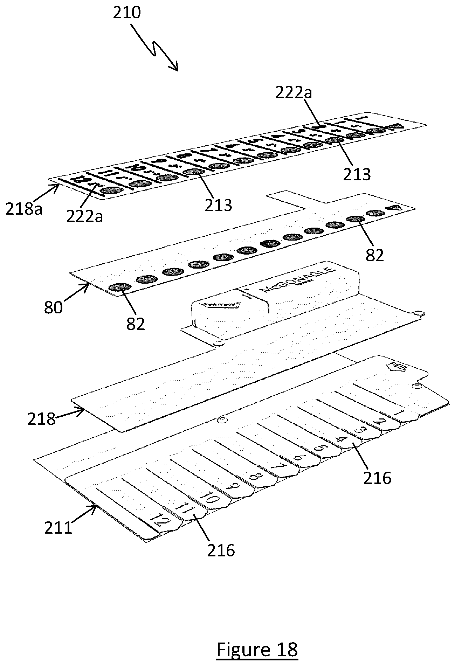

Referring to Figure 18, an optional arrangement is shown whereby an electrical circuit substrate 80 is provided and includes a respective detector 82, e.g. touch-sensitive switch, for each activation device 213. The detectors 82 are connected to electrical circuitry (not shown) that is part of the audio system 60. The substrate 80 is located beneath the array of activation devices 213, i.e. below the substrate 218a, such that each activation device 213 is aligned with the respective detector 82. When the elector activates any one of the activation devices 213, the corresponding detector 82 is activated to send a corresponding activation signal to the audio system 60. In the embodiment of Figure 19 an alternative arrangement is provided whereby the activation devices 313 are provided on the substrate 80, and the substrate 318a includes at least one formation, preferably a respective formation, for exposing the activation devices 313 for use by the elector.

**It** should be understood that, while the description above refers to three embodiments, the skilled person would understand that the features of said embodiments would be easily interchangeable. For example the alignment features, securing features, indicating means, attachment features, alignment features, support portions, audio output arrangements, connectivity features, or voting aid type of one embodiment may be replaced with that of another embodiment. In addition, the dimensions of the apparatus can be adapted to suit any format of ballot paper having any number of ballots thereon and as such it should not be construed as limited to the shape and size as shown in the drawings. It should also be noted that, the skilled person would understand that features of all embodiments may be replaceable with equivalent features within the knowledge of said skilled person. For example, whilst physical buttons are shown, touchscreen(s) may be provided in their place.

The present invention therefore provides a more accurate and consistent way for visually impaired electors to vote without the aid of a companion or a presiding officer.

## Claims

1. A voting apparatus (10) for receiving a ballot paper having at least one markable voting option, the apparatus comprising:
a voting aid (11) for overlying the ballot paper and comprising a respective ballot marking
aid for each voting option of the ballot paper; and
an audio system (60) comprising means for providing an audio output comprising
information corresponding to each voting option,
**characterized in that** said audio system comprises a respective user activation device (13) for each voting option, and wherein in response to operation of any one of said user activation devices, said audio system is configured to provide the audio output for a respective one of the voting options.

2. The voting apparatus of claim 1, wherein the audio system comprises audio output means (14, 24, 62) for audibly rendering said audio output, said audio output means preferably comprising a loudspeaker, and/or wherein the audio system comprises audio output means for providing said audio output to an audio rendering device, for example headphones, earphones or a loudspeaker, wherein the audio output means optionally comprises an audio output jack, audio output port and/or a wireless transmitter for providing the audio output to the audio rendering device by cable or a wireless connection.

3. The voting apparatus of any preceding claim, wherein the user activation devices are provided on a body of the voting apparatus or on the voting aid.

4. The voting apparatus of claim 1, wherein the user activation devices are arranged for alignment with a respective voting option and/or with a respective ballot marking aid.

5. The voting apparatus of any preceding claim, further including respective guide means, preferably tactile guide means, for guiding a user between each activation device and the respective voting option, and/or means for exposing a marking region of the respective voting option, and/or ballot marking aid, wherein, optionally, the guide means is provided at least partly on the respective ballot marking aid.

6. The voting apparatus of any preceding claim, wherein the audio system includes means for storing a respective audio file associated with each user activation device, wherein in response to operation of any one of said user activation devices, said audio system is configured to play the associated audio file.

7. The voting apparatus of any preceding claim, wherein the user activation devices are arranged in a linear array and have a spatial arrangement that matches the spatial arrangement of the voting options on the ballot paper.

8. The voting apparatus of any preceding claim, wherein said voting aid is located, in use, such that each ballot marking aid is aligned with a corresponding user activation device, preferably located adjacent the respective user activation device or beneath the respective user activation device.

9. The voting apparatus of any preceding claim, wherein each ballot marking aid includes securing means operable to selectively expose a marking region of the respective voting option, the securing means preferably being operable to selectively expose or cover the respective marking region.

10. The voting apparatus of claim 9, wherein said securing means is operable to overlap with and/or to overlie the respective activation device, the securing means preferably being foldable or otherwise movable to overlap with and/or to overlie the respective activation device, the securing means more preferably being foldable or otherwise movable onto the respective activation device.

11. The voting apparatus of claim 9 or 10, wherein said securing means is operable between a ballot-exposing state and a ballot-covering state, and wherein in one or other of said ballot-exposing state and said ballot-covering state said securing means overlaps with and/or overlies the respective user activation device, the securing means preferably overlapping and/or overlying the respective user activation device in said ballot-exposing state, and wherein, preferably, said securing means comprises a tab or other structure that is movable between said ballot-exposing state and said ballot-covering state, and wherein, preferably, the tab or other structure is foldable between the ballot-exposing and ballot-covering states.

12. The voting apparatus of one of claims 9 to 11, wherein each ballot marking aid comprises an aperture, window or other means for exposing the marking region of the respective voting option, and wherein said securing means is operable to selectively cover or otherwise secure the respective aperture, window or exposing means, or otherwise to indicate that the respective voting option has been marked, and wherein, preferably the apparatus is arranged so that each user activation device is located adjacent the respective aperture, window or exposing means.

13. The voting apparatus of claim 12, wherein said securing means is located adjacent the respective user activation device, or is located on the opposite side of the respective aperture, window or exposing means from the respective activation device.

14. The voting apparatus of any preceding claim, wherein each user activation device comprises a button or a switch or other user input device, preferably a touch-operated user input device, more preferably a user input device that is operable by a user's finger.

15. The voting apparatus of any preceding claim, wherein the audio system includes audio input means for enabling audio files to be received by the audio system, the audio input means optionally comprising a hardware interface such as a cable or device port, and/or a memory card slot, and/or a wireless receiver.

## Patentansprüche

1. Wahlvorrichtung (10) zum Aufnehmen eines Stimmzettels mit mindestens einer markierbaren Wahlmöglichkeit, die Vorrichtung umfassend:
eine Wahlhilfe (11) zum Überlagern des Stimmzettels und umfassend eine jeweilige Stimmzettelmarkierhilfe für jede Wahlmöglichkeit des Stimmzettels; und
ein Audiosystem (60), umfassend Mittel zum Bereitstellen einer Audioausgabe, umfassend
Informationen in Bezug auf jede Wahlmöglichkeit, **dadurch gekennzeichnet, dass** das Audiosystem eine jeweilige Benutzeraktivierungsvorrichtung (13) für jede Wahlmöglichkeit umfasst, und wobei das Audiosystem als Reaktion auf die Betätigung einer der Benutzeraktivierungsvorrichtungen so konfiguriert ist, dass es die Audioausgabe für eine jeweilige der Wahlmöglichkeiten bereitstellt.

2. Wahlvorrichtung nach Anspruch 1, wobei das Audiosystem ein Audioausgabemittel (14, 24, 62) zum hörbaren Wiedergeben der Audioausgabe umfasst, wobei das Audioausgabemittel vorzugsweise einen Lautsprecher umfasst, und/oder wobei das Audiosystem ein Audioausgabemittel umfasst, um die Audioausgabe an eine Audiowiedergabevorrichtung bereitzustellen, zum Beispiel Kopfhörer, Ohrhörer oder einen Lautsprecher, wobei das Audioausgabemittel optional eine Audioausgangsbuchse, einen Audioausgangsanschluss und/oder einen drahtlosen Sender umfasst, um die Audioausgabe über ein Kabel oder eine drahtlose Verbindung an die Audiowiedergabevorrichtung bereitzustellen.

3. Wahlvorrichtung nach einem der vorhergehenden Ansprüche, wobei die Benutzeraktivierungsvorrichtungen an einem Körper der Wahlvorrichtung oder an der Wahlhilfe bereitgestellt sind.

4. Wahlvorrichtung nach Anspruch 1, wobei die Benutzeraktivierungsvorrichtungen zur Ausrichtung an einer jeweiligen Wahlmöglichkeit und/oder an einer jeweiligen Wahlmarkierungshilfe angeordnet sind.

5. Wahlvorrichtung nach einem der vorangehenden Ansprüche, die ferner jeweilige Führungsmittel beinhaltet, vorzugsweise taktile Führungsmittel, zum Führen eines Benutzers zwischen jeder Aktivierungsvorrichtung und der jeweiligen Wahlmöglichkeit und/oder Mittel zum Freilegen eines Markierungsbereichs der jeweiligen Wahlmöglichkeit und/oder Stimmzettelmarkierungshilfe, wobei die Führungsmittel optional mindestens teilweise an der jeweiligen Stimmzettelmarkierungshilfe bereitgestellt sind.

6. Wahlvorrichtung nach einem der vorhergehenden Ansprüche, wobei das Audiosystem Mittel zum Speichern einer jeweiligen Audiodatei beinhaltet, die jeder Benutzeraktivierungsvorrichtung zugeordnet ist, wobei als Reaktion auf die Betätigung einer der Benutzeraktivierungsvorrichtungen das Audiosystem so konfiguriert ist, dass es die zugeordnete Audiodatei abspielt.

7. Wahlvorrichtung nach einem der vorhergehenden Ansprüche, wobei die Benutzeraktivierungsvorrichtungen in einer linearen Anordnung angeordnet sind und eine räumliche Anordnung aufweisen, die mit der räumlichen Anordnung der Wahlmöglichkeiten auf dem Stimmzettel übereinstimmt.

8. Wahlvorrichtung nach einem der vorhergehenden Ansprüche, wobei die Wahlhilfe im Gebrauch derart angeordnet ist, dass jede Stimmzettelmarkierungshilfe an einer entsprechenden Benutzeraktivierungsvorrichtung ausgerichtet ist, die sich vorzugsweise benachbart zu der jeweiligen Benutzeraktivierungsvorrichtung oder unter der jeweiligen Benutzeraktivierungsvorrichtung befindet.

9. Wahlvorrichtung nach einem der vorhergehenden Ansprüche, wobei jede Wahlmarkierungshilfe Sicherungsmittel beinhaltet, die so betätigt werden können, dass sie einen Markierungsbereich der jeweiligen Wahlmöglichkeit selektiv freilegen, wobei die Sicherungsmittel vorzugsweise so betätigt werden können, dass sie den jeweiligen Markierungsbereich selektiv freilegen oder abdecken.

10. Wahlvorrichtung nach Anspruch 9, wobei das Sicherungsmittel so betätigt werden kann, dass es die jeweilige Aktivierungsvorrichtung überlappt und/oder überlagert, wobei das Sicherungsmittel vorzugsweise faltbar oder anderweitig beweglich ist, um die jeweilige Aktivierungsvorrichtung zu überlappen und/oder zu überlagern, wobei das Sicherungsmittel noch bevorzugter faltbar oder anderweitig auf die jeweilige Aktivierungsvorrichtung beweglich ist.

11. Wahlvorrichtung nach Anspruch 9 oder 10, wobei das Sicherungsmittel zwischen einem Zustand, in dem der Stimmzettel freigelegt wird, und einem Zustand, in dem der Stimmzettel abgedeckt wird, betätigt werden kann, und wobei das Sicherungsmittel in dem Zustand, in dem der Stimmzettel freigelegt wird, oder dem Zustand, in dem der Stimmzettel abgedeckt wird, die jeweilige Benutzeraktivierungsvorrichtung überlappt und/oder überlagert, wobei das Sicherungsmittel vorzugsweise die jeweilige Benutzeraktivierungsvorrichtung in dem Zustand, in dem der Stimmzettel freigelegt wird, überlappt und/oder überlagert, und wobei vorzugsweise das Sicherungsmittel eine Lasche oder eine andere Struktur umfasst, die zwischen dem Zustand, in dem der Stimmzettel freigelegt wird, und dem Zustand, in dem der Stimmzettel abgedeckt wird, beweglich ist, und wobei vorzugsweise die Lasche oder die andere Struktur zwischen dem Zustand, in dem der Stimmzettel freigelegt wird, und dem Zustand, in dem der Stimmzettel abgedeckt wird, faltbar ist.

12. Wahlvorrichtung nach einem der Ansprüche 9 bis 11, wobei jede Stimmzettelmarkierungshilfe eine Öffnung, ein Fenster oder ein anderes Mittel zum Freilegen des Markierungsbereichs der jeweiligen Wahloption umfasst, und wobei das Sicherungsmittel betätigt werden kann, um die jeweilige Öffnung, das Fenster oder das Freilegungsmittel selektiv abzudecken oder anderweitig zu sichern oder um anderweitig anzuzeigen, dass die jeweilige Wahloption markiert wurde, und wobei die Vorrichtung vorzugsweise so angeordnet ist, dass sich jede Benutzeraktivierungsvorrichtung benachbart zu der jeweiligen Öffnung, dem Fenster oder dem Freilegungsmittel befindet.

13. Wahlvorrichtung nach Anspruch 12, wobei sich das Sicherungsmittel benachbart zu der jeweiligen Benutzeraktivierungsvorrichtung befindet oder sich auf der der jeweiligen Aktivierungsvorrichtung gegenüberliegenden Seite der jeweiligen Öffnung, des Fensters oder des Freilegungsmittels befindet.

14. Wahlvorrichtung nach einem der vorhergehenden Ansprüche, wobei jede Benutzeraktivierungsvorrichtung eine Taste oder einen Schalter oder eine andere Benutzereingabevorrichtung umfasst, vorzugsweise eine berührungsbetätigte Benutzereingabevorrichtung, insbesondere eine Benutzereingabevorrichtung, die mit dem Finger eines Benutzers betätigt werden kann.

15. Wahlvorrichtung nach einem der vorhergehenden Ansprüche, wobei das Audiosystem ein Audioeingabemittel beinhaltet, um das Empfangen von Audiodateien durch das Audiosystem zu ermöglichen, wobei das Audioeingabemittel optional eine Hardwareschnittstelle wie einen Kabel- oder Vorrichtungsanschluss und/oder einen Speicherkartenschlitz und/oder einen drahtlosen Empfänger umfasst.

## Revendications

1. Appareil de vote (10) destiné à recevoir un bulletin de vote présentant au moins une option de vote pouvant être marquée, l'appareil comprenant :
une aide au vote (11) destinée à recouvrir le bulletin de vote et comprenant une aide au marquage de bulletin respective pour chaque option de vote du bulletin de vote ; et
un système audio (60) comprenant un moyen pour fournir une sortie audio comprenant
des informations correspondant à chaque option de vote, **caractérisé en ce que** ledit système audio comprend un dispositif d'activation d'utilisateur respectif (13) pour chaque option de vote, et dans lequel en réponse à l'actionnement de l'un quelconque desdits dispositifs d'activation d'utilisateur, ledit système audio est configuré pour fournir la sortie audio pour une option de vote respective parmi les options de vote.

2. Appareil de vote selon la revendication 1, dans lequel le système audio comprend un moyen de sortie audio (14, 24, 62) pour restituer de manière audible ladite sortie audio, ledit moyen de sortie audio comprenant de préférence un haut-parleur, et/ou dans lequel le système audio comprend un moyen de sortie audio pour fournir ladite sortie audio à un dispositif de restitution audio, par exemple un casque audio, des écouteurs ou un haut-parleur, dans lequel le moyen de sortie audio comprend éventuellement une prise de sortie audio, un port de sortie audio et/ou un émetteur sans fil pour fournir la sortie audio au dispositif de restitution audio par câble ou par connexion sans fil.

3. Appareil de vote selon une quelconque revendication précédente, dans lequel les dispositifs d'activation d'utilisateur sont prévus sur un corps de l'appareil de vote ou sur l'aide au vote.

4. Appareil de vote selon la revendication 1, dans lequel les dispositifs d'activation d'utilisateur sont disposés pour être alignés avec une option de vote respective et/ou avec une aide au marquage de bulletin respective.

5. Appareil de vote selon une quelconque revendication précédente, comportant également un moyen de guidage respectif, de préférence un moyen de guidage tactile, pour guider un utilisateur entre chaque dispositif d'activation et l'option de vote respective, et/ou un moyen pour exposer une région de marquage de l'option de vote respective, et/ou une aide au marquage de bulletin, dans lequel, éventuellement, le moyen de guidage est prévu au moins partiellement sur l'aide au marquage de bulletin respective.

6. Appareil de vote selon une quelconque revendication précédente, dans lequel le système audio comporte un moyen pour stocker un fichier audio respectif associé à chaque dispositif d'activation d'utilisateur, dans lequel, en réponse à l'actionnement de l'un quelconque desdits dispositifs d'activation d'utilisateur, ledit système audio est configuré pour lire le fichier audio associé.

7. Appareil de vote selon une quelconque revendication précédente, dans lequel les dispositifs d'activation d'utilisateur sont disposés dans un réseau linéaire et présentent une disposition spatiale qui correspond à la disposition spatiale des options de vote sur le bulletin de vote.

8. Appareil de vote selon une quelconque revendication précédente, dans lequel ladite aide au vote est située, en utilisation, de sorte que chaque aide au marquage de bulletin est alignée avec un dispositif d'activation d'utilisateur correspondant, de préférence situé à proximité du dispositif d'activation d'utilisateur respectif ou sous le dispositif d'activation d'utilisateur respectif.

9. Appareil de vote selon une quelconque revendication précédente, dans lequel chaque aide au marquage de bulletin comporte un moyen de fixation actionnable pour exposer de manière sélective une région de marquage de l'option de vote respective, le moyen de fixation étant actionnable de préférence pour exposer ou couvrir de manière sélective la région de marquage respective.

10. Appareil de vote selon la revendication 9, dans lequel ledit moyen de fixation est actionnable pour chevaucher et/ou recouvrir le dispositif d'activation respectif, le moyen de fixation étant de préférence pliable ou autrement mobile pour chevaucher et/ou recouvrir le dispositif d'activation respectif, le moyen de fixation étant de manière davantage préférée pliable ou autrement mobile sur le dispositif d'activation respectif.

11. Appareil de vote selon la revendication 9 ou 10, dans lequel ledit moyen de fixation est actionnable entre un état d'exposition de bulletin et un état de recouvrement de bulletin, et dans lequel dans l'un ou l'autre desdits états d'exposition de bulletin et de recouvrement de bulletin ledit moyen de fixation chevauche et/ou recouvre le dispositif d'activation d'utilisateur respectif, le moyen de fixation chevauchant et/ou recouvrant de préférence le dispositif d'activation d'utilisateur respectif dans ledit état d'exposition de bulletin, et dans lequel, de préférence, ledit moyen de fixation comprend une languette ou une autre structure qui est mobile entre ledit état d'exposition de bulletin et ledit état de recouvrement de bulletin, et dans lequel, de préférence, la languette ou l'autre structure est pliable entre les états d'exposition de bulletin et de recouvrement de bulletin.

12. Appareil de vote selon l'une des revendications 9 à 11, dans lequel chaque aide au marquage de bulletin comprend une ouverture, une fenêtre ou un autre moyen pour exposer la région de marquage de l'option de vote respective, et dans lequel ledit moyen de fixation est actionnable pour couvrir de manière sélective ou autrement fixer l'ouverture, la fenêtre ou le moyen d'exposition respectif, ou autrement pour indiquer que l'option de vote respective a été marquée, et dans lequel, de préférence, l'appareil est disposé de sorte que chaque dispositif d'activation d'utilisateur est situé à proximité de l'ouverture, de la fenêtre ou du moyen d'exposition respectif.

13. Appareil de vote selon la revendication 12, dans lequel ledit moyen de fixation est situé à proximité du dispositif d'activation d'utilisateur respectif, ou est situé sur le côté opposé de l'ouverture, de la fenêtre ou du moyen d'exposition respectif par rapport au dispositif d'activation respectif.

14. Appareil de vote selon une quelconque revendication précédente, dans lequel chaque dispositif d'activation d'utilisateur comprend un bouton ou un commutateur ou un autre dispositif d'entrée utilisateur, de préférence un dispositif d'entrée utilisateur à commande tactile, de manière davantage préférée un dispositif d'entrée utilisateur qui est actionnable par le doigt d'un utilisateur.

15. Appareil de vote selon une quelconque revendication précédente, dans lequel le système audio comporte un moyen d'entrée audio pour permettre à des fichiers audio d'être reçus par le système audio, le moyen d'entrée audio comprenant éventuellement une interface matérielle telle qu'un port de câble ou de dispositif, et/ou une fente de carte mémoire, et/ou un récepteur sans fil.
